# EUROPEAN PATENT APPLICATION

(11) **EP 4 712 355 A1**
(43) Date of publication of application: **18.03.2026**
(21) Application number: 24200041.2
(22) Date of filing: 12.09.2024
(51) Int. Cl.: H04B 1/10, H04B 1/525

(54) **A TRANSCEIVER CIRCUIT AND COMMUNICATIONS DEVICE**

(71) Applicant: NXP B.V., 5656 AG Eindhoven (NL)
(72) Inventor: den Besten,, Gerrit Willem, 5656 AG Eindhoven (NL)
(74) Representative: Schmütz, Christian Klaus Johannes

(57) **Abstract**

There is disclosed a transceiver circuit comprising: a receiver channel configured to receive a signal comprising a sequence of symbols comprising interference; an interference detection unit configured to determine a difference signal for each symbol; an interference filter comprising a plurality of filter taps each associated with a different interference symbol of an interference signal, wherein each filter tap comprises: a filter coefficient generator configured to generate a filter coefficient based on: the difference signal; and the interference symbol of the filter tap; and a filter signal generator configured to generate a filter signal based on the filter coefficient and the interference symbol and the filter signal generator is configured to output the filter signal for combination with the received symbol, and wherein each filter signal generator is configured to operate in one of: an activated mode; and a deactivated mode, and the transceiver circuit comprises a tap control unit configured to control whether each filter signal generator of the filter tap operates in the activated mode or the deactivated mode based on a comparison of the filter coefficient to a predetermined threshold value.

## Description

### Field

The present disclosure relates to a transceiver circuit configured to simultaneously transmit and receive signals.

### Summary

According to a first aspect of the present disclosure, there is disclosed a transceiver circuit configured to simultaneously transmit and receive signals comprising:
a receiver channel configured to receive a signal, wherein the received signal comprises interference and wherein the received signal is comprised of a sequence of symbols;
an interference detection unit configured to determine a difference signal for each symbol wherein the difference signal is indicative of a difference between the received symbol and a quantisation of the received symbol;
an interference filter comprising a plurality of filter taps wherein each filter tap is associated with a different interference symbol of an interference signal wherein each interference symbol corresponds to interference which is expected to impact the received symbol and wherein each filter tap comprises:
   a filter coefficient generator configured to generate a filter coefficient for reducing the impact of the associated interference symbol on the received symbol wherein the filter coefficient is generated based on:
      the difference signal corresponding to the received symbol; and
      the interference symbol associated with the filter tap; and
   a filter signal generator configured to generate a filter signal based on the filter coefficient and the interference symbol associated with the received symbol and wherein the filter signal generator is further configured to output the filter signal for combination with the received symbol to reduce the interference, and
wherein each filter signal generator is configured to switchably operate in one of:
   an activated mode, in which the filter signal generator outputs the filter signal for combination with the received symbol; and
   a deactivated mode in which the filter signal generator does not output the filter signal for combination with the symbol associated with the filter tap, and
wherein the transceiver circuit further comprises a tap control unit configured to, for each filter tap, control whether the filter signal generator of the filter tap operates in the activated mode or the deactivated mode based on a comparison of the filter coefficient to a predetermined threshold value.

In one or more embodiments, the transceiver circuit may further comprise a transmitter channel configured to transmit a transmitted signal and wherein the transmitted signal is comprised of a sequence of symbols and wherein, for each filter tap, the interference symbol is a symbol of the transmitted signal associated with the received symbol.

In one or more embodiments, for each filter tap, the interference symbol may be a symbol of the transmitted signal which is anticipated to be, at least in part, reflected upon receipt at a characteristic impedance discontinuity in the channel along which the transmitted signal travels and received back at the transceiver after a predetermined delay.

In one or more embodiments, the filter coefficient generator may be configured to switchably operate in one of:
an activated mode, in which the filter coefficient generator is configured to generate the filter coefficient; and
a deactivated mode, in which the filter coefficient generator does not generate the filter coefficient;
and wherein the tap control unit is further configured to, for each filter tap, control whether the filter coefficient generator of the filter tap operates in the activated mode or the deactivated mode based on the comparison of the filter coefficient of the filter coefficient generator to the predetermined threshold value.

In one or more embodiments, the tap control unit may be configured to, for each filter tap when the filter coefficient generator is operating in the deactivated mode, periodically activate the filter coefficient generator in order to generate the filter coefficient and wherein the tap control unit may be further configured to either:
set the filter coefficient generator to operate in the deactivated mode; or
set the filter signal generator to operate in the activated mode,
based on a comparison of the filter coefficient to the predetermined threshold value.

In one or more embodiments, the filter taps may be arranged sequentially such that each filter tap in the sequence is associated with a corresponding next symbol in the sequence of symbols in the interference signal and wherein the tap control unit may be configured to, for each filter tap, control whether one or both the filter coefficient generator and the filter signal generator operates in the activated mode or the deactivated mode further based on whether a filter signal generator of an adjacent filter tap in the sequence of filter taps is currently operating in the activated mode.

In one or more embodiments, the filter taps may be arranged sequentially such that each filter tap in the sequence is associated with a corresponding next symbol in the sequence of symbols in the interference signal and wherein, for each filter tap when the filter coefficient generator is operating in the deactivated mode, the tap control unit is configured to periodically activate the filter coefficient generator at one of a first rate and a second rate wherein the second rate is greater than the first rate and wherein the tap control unit is configured to:
periodically activate the filter coefficient generator at the first rate when none of the filter signal generators of any adjacent filter taps in the sequence of filter taps is operating in the activated mode; and
periodically activate the filter coefficient generator at the second rate when a filter signal generator of any adjacent filter tap is operating in the activated mode.

In one or more embodiments, the deactivated mode of the filter signal generator may comprise a mode in which the provision of a clock signal to the filter signal generator is prevented.

In one or more embodiments, the deactivated mode of the filter coefficient generator may comprise a mode in which the provision of a clock signal to the filter coefficient generator is prevented.

According to a second aspect of the present disclosure, there is disclosed a communications device comprising the transceiver circuit of the first aspect.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example embodiment of a transceiver according to the present disclosure;
Figure 2 shows an example embodiment of a tap filter and a receiver path according to the present disclosure;
Figure 3 shows another example embodiment of a tap filter and a receiver path according to the present disclosure; and
Figure 4 shows an example communications device comprising the transceiver according to the present disclosure.

### Detailed Description

On a full-duplex link, one which provides for simultaneous transmission and receipt of signals, a signal transmitted by a transceiver can be partially reflected due to characteristic impedance discontinuities in the transmission channel. This reflection gets superpositioned as interference on the received signal resulting from transmission of the far-end transceiver. The duration of the reflection expressed in symbol-intervals tend to grow for higher data rates and long transmission channels.

In order to mitigate such interference effects, an interference filter that comprises a plurality of filter taps can be implemented on the receiver side which is able to determine the impact of reflections from each symbol of the transmission signal on each corresponding symbol of the received signal. Each filter tap can then scale the corresponding transmission signal symbol based on the determined impact and the scaled transmission signal symbol can then be applied to, such as subtracted from, the corresponding symbol of the received signal (the received signal) in order to mitigate the impact of the interference.

It is unlikely that significant reflections will occur for all tap positions, as the most dominant reflections will likely be caused by transceiver package, discrete components connected to the signal wires in the transceiver module, module-to-cable connectors, in-line connectors, differences in characteristic impedance of multiple (cascaded) cables, and the return loss of the far-end transceiver module. The reflections caused within a cable itself are likely to be minor in comparison, as bulk cable material tends to be pretty homogeneous. This implies that a significant fraction of all tap filters will be insignificant as they map to homogeneous regions of the channel.

It is not known upfront, however, which taps will be insignificant if the channel is unknown. Further, channel characteristics are dependent on environmental conditions and may vary over time, meaning that tap filters which are insignificant at one point in time may become significant at a later point. Therefore, the present disclosure provides for a transceiver circuit which provides for energy savings in the interference filter by controlling the activation of the tap filters based on in-line monitoring. While one application of the disclosed transceiver and interference filter are for providing energy savings for filter taps which are applied to reduce interference from reflected transmission signals, the present disclosure may also be applied to other interference filters which utilise filter taps, such as those in DFE correction taps.

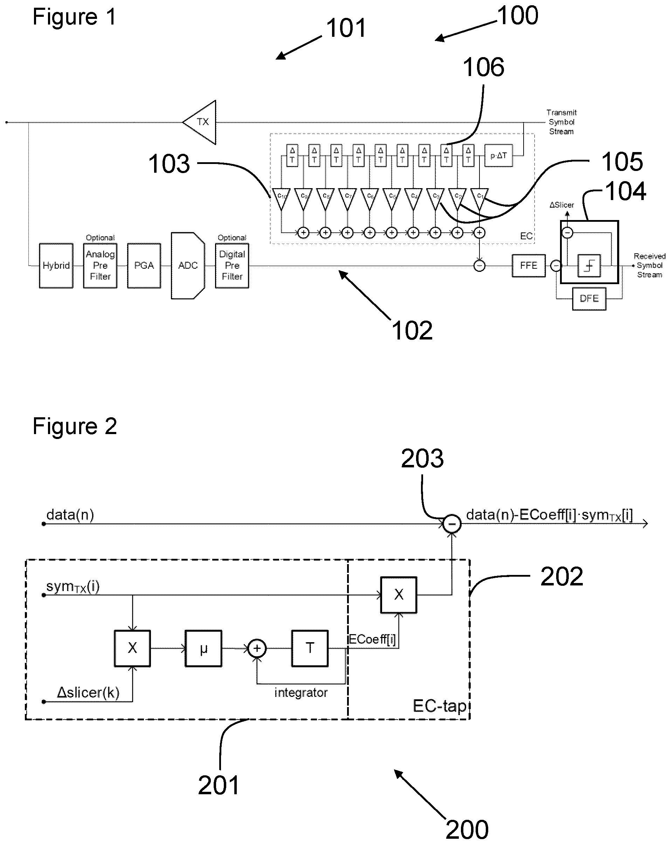

Figure 1 shows an example transceiver 100 according to the present disclosure. The transceiver comprises a transmission circuit 101 which is configured to provide for transmission of a signal. The transmission signal can be considered as a sequential stream of symbols. Each symbol can be defined as, in the case of pulse amplitude modulation, a voltage level of the signal. It will be appreciated that there are other ways of encoding data for transmission other than pulse amplitude modulation and that the present disclosure may equally apply to transceivers which use those techniques.

In embodiments wherein the transceiver 100 is a full duplex transceiver, the transceiver 100 is configured to simultaneously: receive signals, which can be referred to as received signals and which are received at the receiver circuit 102 of the transceiver 100; and transmit signals. Similarly to the transmission signals, the received signals can also be defined as a sequential stream of symbols. As has been described above, the received signal of a transceiver 100 is likely to comprise interference in the form of reflections of the transmitted signal. It can be determined by which particular transmitted symbols the currently received signal symbol ise impacted and, by way of this determination, an interference filter 103 can be used to mitigate this interference. Specifically, the interference symbols for a given received symbol may be symbols of the transmitted signal which is anticipated to be, at least in part, reflected upon receipt at a characteristic impedance discontinuity in the channel along which the transmitted signal travels and received back at the transceiver after a predetermined delay. The characteristic impedance discontinuities in the channel may be an end (destination) of the channel, a connector in the channel, a choke or any other impedance difference. Similarly, where the interference filter 103 is filtering interference other than transmitted signal reflections, it is possible to associate an interference symbol, being a symbol that is expected to cause interference, with the symbol in the received signal which it is expected to interfere with.

The transceiver comprises an interference detection unit 104 which is configured to determine a difference signal for each symbol of the received signal. Each difference signal is indicative of a difference between the received symbol and a quantisation of the received symbol. For example, the interference detection unit 104 may comprise a slicer which may be configured to determine the quantisation of each received symbol. To provide a simple example, in a binary system, a slicer (otherwise known as a quantizer) determines whether the received symbol should be a 1 or a 0 based on voltage level (in this example) of the received signal. That is, the slicer effectively rounds the voltage level to the nearest quantisation level. The difference between the true signal and the quantisation level to which the signal is rounded may be taken as the difference signal, or the difference signal may be based on this difference. The difference signal may also be referred to as a quantization error. Note that, while binary signals are used herein, it will be appreciated that many transceivers are not binary and that the present disclosure can be equally applied to higher-order multi-level symbol systems. For example, the present disclosure may be applied to 2-level (PAM2), 3-level (PAM3) and 4-level (PAM4) signalling in BASE-T1 transceivers.

The transceiver further comprises the interference filter 103 which comprises a plurality of filter taps 105. Each filter tap 105 is associated with a different interference symbol wherein, in some embodiments, the interference symbol is a symbol of the sequence of symbols of the transmitted signal. Delay elements 106 may be used to associate each of the symbols of the interference signal with a respective filter tap 105. That is, the delay elements 106 may implement unit interval (UI) delays to the interference signal (which may be the transmission signal) as it is received so that each filter tap 105 is associated with a different interference symbol of the interference signal. For the sake of brevity, the circuitry required to associate the filter taps with received symbols will not be discussed in further detail herein.

The filter taps are together configured to generate filter signals which can be applied to the received signal in order to cancel interference in the received signal. In particular, each received symbol of the received signal may be impacted by each of the different interference symbols of the interference signal. The impact imparted by each interference symbol may vary and so providing each of the filter taps allows for scaling to account for each of the separate impact of each symbol. Each filter tap 105 is therefore configured to generate a coefficient that represents the correlation between the interference symbol and the interference appearing in the received signal at a certain point in time. The result can be applied to its associated received symbol in order to reduce the impact of the associated interference symbol.

It can be noted that the filter structure provided herein is just one example to ease explanation of the concept. Alternative filter implementations are possible, utilizing the same concepts as described herein.

Figure 2 shows an example filter tap 200 according to the present disclosure. Each filter tap 200 comprises both a filter coefficient generator 201 and a filter signal generator 202 which together generate the filter signal for application to the received symbol associated with the filter tap 200.

The purpose of the filter coefficient generator 201 is to generate a coefficient which can be used to scale the interference symbol (which may be a transmitted symbol) of the interference signal (which may be the transmitted signal) which is associated with the received symbol of the filter tap 200 at a particular point in time. That is, the filter coefficient is for reducing the impact of an interference symbol on the received symbol by scaling the interference symbol. It will be appreciated that after each symbol clock tick of the system, the received symbol and interference symbols move along by one. The present disclosure describes how the transceiver circuit operates with respect to a single received symbol and set of interference symbols, however, it will be understood that the transceiver circuit operates dynamically such that the transceiver circuit updates the filter signals with each symbol clock tick. The filter may be as long as the echo response is long. The filter coefficient is determined by the filter coefficient generator 201 based on the difference signal corresponding to the received symbol where the difference signal is received from the interference detection unit 104 and the interference symbol itself. In one or more embodiments, the filter coefficient generator 201 continuously looks for a correlation between the difference signal and the interference symbol (which may be a symbol of the transmitted signal) and outputs a coefficient based on the correlation. For example, where the correlation is strong, this may imply that the interference symbol is having a significant impact on the received symbol and, as such, a large filter coefficient is required to apply a large correction to the received symbol. Alternatively, where the correlation is weak, this may imply that the interference symbol is not having much of an impact on the received signal and so only a small amount of correction (only a small filter coefficient) is needed. The system may determine the coefficient in a plurality of different ways, however, in one example, the filter coefficient generator 201 may be a least mean squares (LMS) coefficient generator 201 which may implement a least mean squares algorithm to provide for generation of the filter coefficient.

The filter signal generator 202 is configured to generate a filter signal based on the filter coefficient and the interference symbol associated with the received symbol of the filter tap. In particular, the filter signal generator 202 may scale the interference symbol which is expected to impact the received symbol using the filter coefficient generated by the filter coefficient generator 201. More particularly, the filter signal generator may comprise a multiplier which is configured to provide for scaling of the interference symbol. It will be appreciated that the scaling may be performed in plurality of different ways and that the use of a multiplier is only one example. The filter signal generator 202 is further configured to output the filter signal for combining with, which may be subtracting from, the received symbol to reduce the interference.

Combining the filter signal with the received symbol may be performed by any suitable component, such as a subtractor 203 which is configured to subtract the filter signal from the received signal. It will be appreciated that there are a wide variety of ways to mix two signals and, as such, the plurality of different approaches will not be discussed further herein.

Each filter signal generator 202 of each filter tap is configured to switchably operate in one of: an activated mode; and a deactivated mode. In the activated mode, the filter signal generator 202 outputs the filter signal for mixing with the received symbol as described above. In the deactivated mode, the filter signal generator 202 does not output the filter signal for mixing with the symbol associated with the filter tap 200. Further, in the deactivated mode, the filter signal generator 202 may be configured such that it does not perform any generation of the filter signal. The filter signal generator 202 may be deactivated by preventing the provision of a clock signal to the filter signal generator 202.

Further, each filter coefficient generator 201 of each filter tap may be configured to switchably operate in one of: an activated mode; and a deactivated mode. In the activated mode, the filter coefficient generator 201 outputs the filter coefficient for mixing with the received symbol as described above. In the deactivated mode, the filter coefficient generator 201 does not generate the filter coefficient for provision to its associated filter signal generator 202. The filter coefficient generator 201 may be deactivated by preventing the provision of a clock signal to the filter coefficient generator 201.

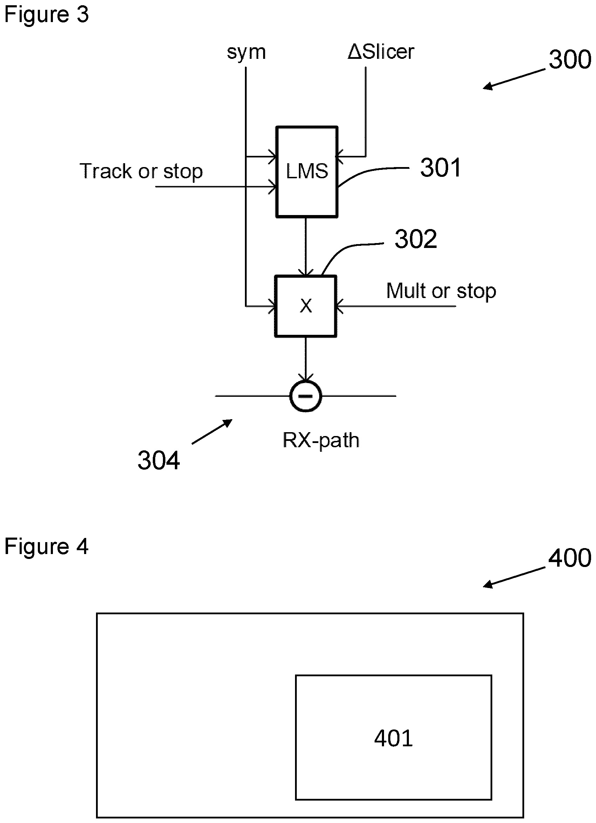

Figure 3 shows a further example of a tap filter 300 and a portion of the receiver path 306 of the transceiver. The transceiver further comprises a tap control unit (not shown) configured to, for each filter tap 300, control whether the filter signal generator 302 operates in the activated mode or the deactivated mode based on a comparison of the filter coefficient to a predetermined threshold value. A predetermined threshold value may be set such that the filter signal generator 302 will operate in the deactivated mode if the impact of the interference symbol on the received signal is considered to be a low level of interference. Similarly, the predetermined threshold may be set such that the filter signal generator 302 will operate in the activated mode if the impact of the interference symbol on the received signal is considered to be significant. The comparison of the filter coefficient to the predetermined threshold value may not be the only factor which the tap control unit takes into account when deciding whether the filter signal generator 302 should operate in the activated mode or the deactivated mode, as is described below. Deactivating the filter signal generator 302 may save power in the transceiver, which may be desirable in circumstances where the interference symbol is not having a significant impact on the received symbol.

The tap control unit may be further configured to, for each filter tap 300, control whether the filter coefficient generator 301 operates in the activated mode or the deactivated mode based on a comparison of the filter coefficient to the predetermined threshold value. The comparison of the filter coefficient to the predetermined threshold value may not be the only factor which the tap control unit takes into account when deciding whether the filter coefficient generator 301 should operate in the activated mode or the deactivated mode, as is described below. Deactivating the filter coefficient generator 301 may also save power in the transceiver, which may be desirable in circumstances where the interference symbol is not having a significant impact on the received symbol. It may be desirable to set the filter coefficient generator 301 into the deactivated mode whenever the filter signal generator 302 is set to the deactivated mode.

The tap control unit may be configured to, for each filter tap 300 when the filter coefficient generator 301 is operating in the deactivated mode, periodically activate the filter coefficient generator 301 in order to generate the filter coefficient. By periodically activating the filter coefficient generator 301, the filter tap 300 is able to determine whether the filter coefficient generator 301 and filter signal generator 302 should continue to operate in a deactivated mode or whether they should both be activated based on a comparison of the filter coefficient to the predetermined threshold value. Thus, based on the comparison indicating that a filter signal is not necessary, the tap control unit may be configured to set the filter coefficient generator 301 to operate in the deactivated mode. Alternatively, based on the comparison indicating that a filter signal is required, the tap control unit may be configured to set the filter signal generator 302 to operate in the activated mode. In this instance, the filter coefficient generator 301 may be configured to continue to operate in the activated mode.

Changes in environmental conditions or other factors that impact propagation speed may impact which interference symbol is to be associated with a particular received symbol. As such, it may be desirable to keep filter taps 300 operating in the activated mode which would otherwise be operating in the deactivated mode based purely on the comparison of their respective difference signal to the predetermined value. For each filter tap, the filter tap control unit is configured to control whether one or both of the filter coefficient generator 301 and the filter signal generator 302 operates in the activated mode based on whether a filter signal generator of an adjacent filter tap in the sequence of filter taps is currently operating in the activated mode. In particular, the control may be provided based on whether a filter signal generator of an adjacent filter tap in the sequence of filter taps is operating in the activated mode as a result of its comparison of its respective difference signal and the predetermined value. By overriding the comparison-based control of the mode of one or both of the filter coefficient generator 301 or the filter signal generator 302 of a filter tap in the case that a filter signal generator of an adjacent filter tap is operating in the activated mode, the transceiver may be made robust to changes in environmental conditions which impact signal propagation speeds.

Similarly, for each filter tap 300 when the filter coefficient generator 301 of the filter tap 300 is operating in the deactivated mode, the tap control unit may be configured to periodically activate the filter coefficient generator 301 at one of a first rate and a second rate wherein the second rate is greater than the first rate. The tap control unit may be configured to periodically activate the filter coefficient generator 301 at the first rate when none of the filter signal generators of any adjacent filter taps in the sequence of filter taps is operating in the activated mode. Further, the tap control unit may be configured to periodically activate the filter coefficient generator 301 at the second rate when a filter signal generator of any adjacent filter tap is operating in the activated mode. In this way, the tap control unit is able to cause each filter tap 300 to check whether it should be activated, when operating in the deactivated mode, more often if an adjacent filter signal generator is operating in the activated mode. This may allow changes in environmental conditions to be checked periodically without needing to provide for adjacent filter coefficient generators 301 to be always-on. This provides for power savings over the example of the previous embodiment while potentially sacrificing reaction time for responding to changes in environmental conditions.

Figure 4 shows an example communications device 400 comprising the transceiver circuit 401 of the present disclosure.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A transceiver circuit configured to simultaneously transmit and receive signals comprising:
a receiver circuit configured to receive a signal, wherein the received signal comprises interference and wherein the received signal is comprised of a sequence of symbols;
an interference detection unit configured to determine a difference signal for each symbol wherein the difference signal is indicative of a difference between the received symbol and a quantisation of the received symbol;
an interference filter comprising a plurality of filter taps wherein each filter tap is associated with a different interference symbol of an interference signal wherein each interference symbol corresponds to interference which is expected to impact the received symbol and wherein each filter tap comprises:
a filter coefficient generator configured to generate a filter coefficient for reducing the impact of the associated interference symbol on the received symbol wherein the filter coefficient is generated based on:
the difference signal corresponding to the received symbol; and
the interference symbol associated with the filter tap; and
a filter signal generator configured to generate a filter signal based on the filter coefficient and the interference symbol associated with the received symbol and wherein the filter signal generator is further configured to output the filter signal for combination with the received symbol to reduce the interference, and
wherein each filter signal generator is configured to switchably operate in one of:
an activated mode, in which the filter signal generator outputs the filter signal for combination with the received symbol; and
a deactivated mode in which the filter signal generator does not output the filter signal for combination with the symbol associated with the filter tap, and
wherein the transceiver circuit further comprises a tap control unit configured to, for each filter tap, control whether the filter signal generator of the filter tap operates in the activated mode or the deactivated mode based on a comparison of the filter coefficient to a predetermined threshold value.

2. The transceiver circuit of claim 1 wherein the transceiver circuit further comprises a transmitter channel configured to transmit a transmitted signal and wherein the transmitted signal is comprised of a sequence of symbols and wherein, for each filter tap, the interference symbol is a symbol of the transmitted signal associated with the received symbol.

3. The transceiver circuit of claim 2 wherein, for each filter tap, each interference symbol is a symbol of the transmitted signal which is anticipated to be, at least in part, reflected upon receipt at a characteristic impedance discontinuity in the channel along which the transmitted signal travels and received back at the transceiver after a predetermined delay.

4. The transceiver circuit of any preceding claim wherein the filter coefficient generator is configured to switchably operate in one of:
an activated mode, in which the filter coefficient generator is configured to generate the filter coefficient; and
a deactivated mode, in which the filter coefficient generator does not generate the filter coefficient;
and wherein the tap control unit is further configured to, for each filter tap, control whether the filter coefficient generator of the filter tap operates in the activated mode or the deactivated mode based on the comparison of the filter coefficient of the filter coefficient generator to the predetermined threshold value.

5. The transceiver circuit of claim 4 wherein the tap control unit is configured to, for each filter tap when the filter coefficient generator is operating in the deactivated mode, periodically activate the filter coefficient generator in order to generate the filter coefficient and wherein the tap control unit is further configured to either:
set the filter coefficient generator to operate in the deactivated mode; or
set the filter signal generator to operate in the activated mode,
based on a comparison of the filter coefficient to the predetermined threshold value.

6. The transceiver circuit of any of claims 4 - 5 wherein the filter taps are arranged sequentially such that each filter tap in the sequence is associated with a corresponding next symbol in the sequence of symbols in the interference signal and wherein the tap control unit may be configured to, for each filter tap, control whether one or both the filter coefficient generator and the filter signal generator operates in the activated mode or the deactivated mode further based on whether a filter signal generator of an adjacent filter tap in the sequence of filter taps is currently operating in the activated mode.

7. The transceiver circuit of any of claim 5 wherein the filter taps are arranged sequentially such that each filter tap in the sequence is associated with a corresponding next symbol in the sequence of symbols in the interference signal and wherein, for each filter tap when the filter coefficient generator is operating in the deactivated mode, the tap control unit is configured to periodically activate the filter coefficient generator at one of a first rate and a second rate wherein the second rate is greater than the first rate and wherein the tap control unit is configured to:
periodically activate the filter coefficient generator at the first rate when none of the filter signal generators of any adjacent filter taps in the sequence of filter taps is operating in the activated mode; and
periodically activate the filter coefficient generator at the second rate when a filter signal generator of any adjacent filter tap is operating in the activated mode.

8. The transceiver circuit of any preceding claim wherein the deactivated mode of the filter signal generator comprises a mode in which the provision of a clock signal to the filter signal generator is prevented.

9. The transceiver circuit of any of claims 4-8 wherein the deactivated mode of the filter coefficient generator comprises a mode in which the provision of a clock signal to the filter coefficient generator is prevented.

10. A communications device comprising the transceiver circuit of any preceding claim.
